# EUROPEAN PATENT APPLICATION

(11) **EP 1 780 587 A1**
(43) Date of publication of application: **02.05.2007**
(21) Application number: 05768478.9
(22) Date of filing: 03.08.2005
(51) Int. Cl.: G02F 1/1339, C08G 59/62, C08K 3/22, C08L 63/00, C09K 3/10

(54) **LIQUID CRYSTAL SEALANT AND LIQUID CRYSTAL DISPLAY CELL UTILIZING THE SAME**

(30) Priority: 11.08.2004 JP 2004234049
(71) Applicant: NIPPON KAYAKU KABUSHIKI KAISHA, Tokyo 102-8172 (JP)
(72) Inventor: NAMIKI, Tsutomu, Tokyo 1150042 (JP); HAYASIBARA, Syouichi, Saitama-shi, Saitama 3380002 (JP); SAKANO, Tsunetoshi, Kawasaki-shi, Kanagawa 2160004 (JP); MORI, Naomi, Tokyo 1150042 (JP); TONEDA, Naoki, Tokyo 1150042 (JP)
(74) Representative: Gille Hrabal Struck Neidlein Prop Roos
(86) International application number: PCT/JP2005/014198
(87) International publication number: WO 2006/016507

(57) **Abstract**

[PROBLEMS] To provide a liquid crystal sealant that exhibits high bonding strength at high temperatures even at a cell gap as narrow as = 3 m, being able to provide a liquid crystal display cell of high reliability, and that with respect to the production process, is applicable to both of the conventional thermosetting sheet-fed process and jig press process. [MEANS FOR SOLVING PROBLEMS] There is provided a liquid crystal sealant comprising as essential components (a) epoxy resin, (b) curing agent containing at least one type of each of novolak resin and polyfunctional hydrazide compound, and (c) inorganic filler.

## Description

### Technical Field

The present invention relates to a liquid crystal sealant which is used in lamination of liquid crystal display cells as flat panel displays and has excellent adhesive property, heat resistance, moisture resistance, liquid-crystal contamination resistance and productivity. Also, the present invention relates to a liquid crystal display cell manufactured by using the same.

### Background Art

In recent years, as liquid crystal display cells have become bigger, a so-called liquid-crystal dropping technique, which has higher productivity, has been proposed as a manufacturing method of the liquid crystal display cells. Various types of sealants for liquid-crystal dropping technique have been also proposed (see Patent Document 1). On the other hand, since applications for small-sized display cells, particularly for portable telephones, further contain moving image functions, the demand for high definition and high-speed response has been required. Particularly, many of the liquid crystal display cells have been used for the portable telephones as value-added products in Japan, and the liquid crystal display cells have been manufactured by multiple chamfering in large-sized mother glasses. In order to correspond to the high-speed response, the narrow gap between the liquid crystal and a cell has been employed. A liquid crystal has become more sensitive, and has been easily be contaminated by impurities as compared with the conventional liquid crystal. Thereby, a higher purity sealant has been required. Panels having a cell gap designed to 3 µm or less are beginning to be manufactured, although the cell gap has been conventionally 4 to 5 µm. The problem of seal peeling has been occurred since the thickness of 3 µm or less causes insufficient stress buffer at high temperatures although said problems have not been generated conventionally, because of a buffer action due to the thickness of the seal in the conventional sealant. Although there has been conventionally proposed a method for adding polymer particulates for stress relaxation, or the like (see Patent Document 2), the adhesion strength thereof at high temperatures has been insufficient.
Patent Document 1: Japanese Patent No. 3162179
Patent Document 2: Japanese Patent Application Laying Open (KOKAI) No. 2000-347203

### Disclosure of the Invention

### Problem to be solved by the invention

It is an object of the present invention to provide a liquid crystal sealant composition which has enough adhesion strength and reliability in moisture resistance such that the seal would not peel even at a cell gap as narrow as ≤ 3 µm during the manufacture of the liquid crystal display cell and is excellent in operability. It is another object of the present invention to provide a method for manufacturing a liquid crystal display cell using this liquid crystal sealant composition and a liquid crystal display element.

### Means for solving problem

As the result of extensive investigations of a way to solve the above-mentioned problems, the present inventors have found that a resin composition having a specific composition can solve the problems, and thus completed the present invention. That is, the present invention relates to the following (1) to (9):
(1) A liquid crystal sealant characterized by comprising: (a) an epoxy resin; (b) a curing agent containing at least one type of each of a novolak resin and a polyfunctional hydrazide compound; and (c) an inorganic filler.
(2) The liquid crystal sealant according to the above (1), wherein the ratio of the novolak resin in the curing agent (b) is from 5 to 90% by weight.
(3) The liquid crystal sealant according to any one of the above (1) and (2), wherein the inorganic filler (c) is alumina and/or silica.
(4) The liquid crystal sealant according to any one of the above (1) to (3), characterized in that the inorganic filler (c) has an average particle diameter of 2000 nm or less.
(5) The liquid crystal sealant according to any one of the above (1) to (4), characterized by further comprising a coupling agent.
(6) The liquid crystal sealant according to the above (5), wherein the coupling agent is an imidazole silane coupling agent.
(7) The liquid crystal sealant according to the above (1) to (6), characterized by further comprising a curing accelerator.
(8) The liquid crystal sealant according to the above (7), wherein the curing accelerator is a latent curing accelerator.
(9) A liquid crystal display cell sealed by the liquid crystal sealant according to any one of the above (1) to (8).

### Effect of the invention

The liquid crystal sealant of the present invention exhibits high bonding strength at high temperatures even at a cell gap as narrow as ≤ 3 µm, being able to provide a liquid crystal display cell of high reliability, and the production process thereof is applicable to both of the conventional thermosetting sheet-fed process and jig press process.

### Best Mode for Carrying Out the Invention

Hereinafter, the present invention will be described in detail.

An epoxy resin composition which is a liquid crystal sealant of the present invention comprises as essential components: (a) an epoxy resin; (b) a curing agent containing at least one type of each of a novolak resin and a polyfunctional hydrazide compound; and (c) an inorganic filler.

The epoxy resin (a) used for the liquid crystal sealant of the present invention is not particularly limited, and examples thereof are bisphenol A type epoxy resins; bisphenol F type epoxy resins; polyfunctional epoxy resins which are glycidyl etherification products of polyphenol compounds such as bisphenol S, 4,4'-biphenylphenol, 2,2',6,6'-tetramethyl-4,4'-biphenylphenol, 2,2'-methylene-bis(4-methyl-6-tert-butylphenol), trishydroxyphenylmethane, pyrogallol, phenols having a diisopropylidene skeleton, phenols having a fluorene skeleton, e.g., 1,1-di-4-hydroxyphenylfluorene, and phenolated polybutadienes; glycidyl etherification products of various novolak resins prepared using, as starting materials, various phenols such as phenol, cresols, ethylphenols, butylphenols, octylphenols, bisphenol A, bisphenol F, bisphenol S and naphthols, including phenol novolak resins having a xylylene skeleton, phenol novolak resins having dicyclopentadiene skeleton, phenol novolak resins having a fluorene skeleton; alicyclic epoxy resins having an aliphatic skeleton such as cyclohexane; heterocyclic epoxy resins having heterocyclic ring such as isocyanuric ring or hydantoin ring; glycidylation epoxy resin of brominated phenols such as brominated bisphenol A, brominated bisphenol F, brominated bisphenol S, brominated phenol novolak and brominated cresol novolak; and publically known and used epoxy resins such as N,N-diglycidyl-o-toluidine, N,N-diglycidylaniline, phenylglycidyl ether, resorcinoldiglycidyl ether, 1,6-hexanedioldiglycidyl ether, trimethylolpropanetriglycidyl ether, polypropylene glycol diglycidyl ether, (3,4-3',4'-epoxycyclo)hexylmethylhexane carboxylate and hexahydrophthalic anhydride diglycidyl ester.

These epoxy resins are used in such an amount as not affecting the operability and physical properties of the resulting liquid crystal sealant. The amount of the epoxy resin in the liquid crystal sealant is usually about 25 to about 60% by weight, and preferably 25 to 50% by weight.

These epoxy resins may also be used in admixture of two or more.

The curing agent (b) used in the liquid crystal sealant of the present invention contains at least one type of each of a novolak resin and a polyfunctional hydrazide compound. The ratio of the novolak resin in the curing agent is 5 to 90% by weight, preferably 15 to 80% by weight, and more preferably 20 to 70% by weight. If the content of the novolak resin in the curing agent is more than 90% by weight, the reliability of panels such as reliability in moisture resistance and liquid-crystal contamination resistance is excellent. However, the sufficient strength and heat resistance at a cell gap as narrow as ≤ 3 µm cannot be obtained, and the panels are apt to be peeled during the production. If the content is less than 5% by weight, the stress relaxation would not be sufficient, and the sufficient adhesion strength may not be obtained.

Examples of the novolak resins capable of being used herein are as follows; novolak resins whose starting materials are various phenols such as bisphenol A, tetrabromobisphenol A, bisphenol F, bisphenol S, 4,4'-biphenylphenol, 2,2',6,6'-tetramethyl-4,4'-biphenylphenol, 2,2'-methylene-bis(4-methyl-6-tert-butylphenol), trishydroxyphenylmethane, pyrogallol, phenols having a diisopropylidene skeleton, phenols having a fluorene skeleton such as 1,1-di-4-hydroxyphenylfluorene, polyphenol compounds such as phenolated polybutadiene, phenol, cresols, ethylphenols, butylphenols, octylphenols, bisphenol A, brominated bisphenol A, bisphenol F, bisphenol S and naphthols; phenolic novolak resins such as phenol novolak resins having a xylylene skeleton, phenol novolak resins having dicyclopentadiene skeleton and phenol novolak resins having a fluorene skeleton. Preferable examples of the novolak resins are as follows; novolak resins whose starting materials are various phenols such as phenol, cresols, ethylphenols, butylphenols, octylphenols, bisphenol A, bisphenol F, bisphenol S and naphthols; and various novolak resins such as phenol novolak resins having a xylylene skeleton, phenol novolak resins having dicyclopentadiene skeleton and phenol novolak resins having a fluorene skeleton. More preferable examples of the novolak resins are as follows; various novolak resins whose starting materials are various phenols such as phenol, cresols, octylphenol, bisphenol A, bisphenol F, bisphenol S and naphthols. Particularly preferable examples of the novolak resins are as follows; phenol novolak resins obtained using phenol as starting materials and cresol novolak resins obtained using cresols as starting materials. These novolak resins are used alone or as a mixture of two or more.

In the present invention, the polyfunctional hydrazide compounds mean compounds having not less than two hydrazide groups in the molecule, such as carbohydrazide, oxalic acid dihydrazide, malonic acid dihydrazide, succinic acid dihydrazide, adipic acid dihydrazide, pimelic acid dihydrazide, suberic acid dihydrazide, azelaic acid dihydrazide, sebacic acid dihydrazide, dodecanedio dihydrazide, hexadecane diohydrazide, maleic acid dihydrazide, fumaric acid dihydrazide, diglycolic acid dihydrazide, tartaric acid dihydrazide, malic acid dihydrazide, isophthalic acid dihydrazide, terephthalic acid dihydrazide, 2,6-naphthoic acid dihydrazide, 4,4-bisbenzene dihydrazide, 1,4- naphthoic acid dihydrazide, 2,6-pyridine dihydrazide, 1,2,4-benzene trihydrazide, pyromellitic acid tetrahydrazide, 1,4,5,8-naphthoic acid tetrahydrazide, and 1,3-bis(hydrazinocarbonoethyl)-5-isopropylhydantoin, however the polyfuctional hydrazaide compounds are not limited thereto. Of these, aromatic polyfunctional hydrazides such as isophthalic acid dihydrazide, adipic acid dihydrazide, terephthalic acid dihydrazide, 2,6-naphthoic acid dihydrazide, 4,4-bis benzene dihydrazide, 1,4-naphthoic acid dihydrazide, 2,6-pyridine dihydrazide, 1,2,4-benzene trihydrazide, pyromellitic acid tetrahydrazide and 1,4,5,8-naphthoic acid tetrahydrazide, and 1,3-bis (hydrazino carbonoethyl)-5-isopropylhydantoin are preferable since they are excellent in latency because of the high melting point and have little solubility to liquid crystals because of high glass transition point of the cured product. Isophthalic acid dihydrazide is particularly preferable.

The amount of the curing agent used in the present invention is 0.6 to 1.4 chemical equivalents, preferably 0.7 to 1.1 chemical equivalent as the sum of equivalent of hydroxyl group in the novolak resin and that of active amino group of the polyfunctional hydrazide compound with respect to the epoxy equivalent of the epoxy resin in the liquid crystal sealant.

The inorganic fillers (c) used in the liquid crystal sealant of the present invention include, for example, alumina, silica, titanium oxide, cobalt oxide, magnesium oxide, nickel oxide, iron oxide, zinc oxide, calcium carbonate, magnesium carbonate, barium sulfate, calcium sulfate, talc, clay, magnesium oxide, zirconium oxide, aluminum hydroxide, magnesium hydroxide, calcium silicate, aluminum silicate, zirconium silicate and barium titanate, and alumina and silica are preferred. If necessary, there may be used these inorganic fillers subjected to hydrophobic treatment and coupling treatment. These inorganic fillers may be used alone or as a mixture of two or more.

The average particle diameter of the inorganic fillers used in the present invention is preferably 2000 nm or less when measured using a laser method or a method calculating by a specific surface area, or the like. If the average particle diameter of the inorganic fillers is more than 2000 nm, because of small specific surface area of the inorganic filler, the inorganic fillers and the resin component of the liquid crystal sealant are prone to separate from each other at the hot pressing after lamination of the upper and lower substrates during the production of the liquid crystal cell, and the inorganic filler is apt to exude. As a result, adhesion strength after curing and adhesion strength after absorption of moisture are apt to be deteriorated. Although the lower limit of the average particle diameter of the inorganic filler is not defined, the lower limit is usually about 3 nm as an average particle diameter.

The content of the inorganic filler in the liquid crystal sealant used in the present invention is 5 to 45% by weight, more preferably 15 to 35% by weight in the total liquid crystal sealant. When the content of the inorganic filler is less than 5% by weight, the liquid crystal sealant would be such low in viscosity that the liquid crystal sealant would be apt to exude at the time of hot pressing in the production of the liquid crystal cell. When the content of the inorganic filler is more than 45% by weight, the filler are not pressed easily at the time of pressing during the production of the liquid crystal cell and so the gap of the liquid crystal cell may not be able to be formed.

An organic filler may be further added to the liquid crystal sealant of the present invention so long as it does not affect the characteristics of the liquid crystal sealant. Examples of the organic fillers include polymer beads and rubber filler of core-shell type. These fillers may be used each alone or as a mixture of two or more.

The average particle diameter of the organic fillers capable of being added is not more than 3 µm, preferably not more than 2 µm. When the average particle diameter of the organic fillers is more than 3 µm, the formation of the cell gap may become difficult. The amount of the organic fillers which can be added is usually not more than 50% by weight based on the weight of the inorganic fillers. When it is more than 50% by weight, the viscosity would be so high that the formation of the cell gap is apt to become difficult.

Curing accelerators may be added into the liquid crystal sealant of the present invention if necessary. The curing accelerators include, for example, imidazoles, salts of imidazoles with polycarboxylic acids such as phthalic acid, isophthalic acid, terephthalic acid, trimellitic acid, pyromellitic acid, naphthalenedicarboxylic acid, maleic acid and oxalic acid; amides such as dicyandiamide and salts of the amides with phenols, the above polycarboxylic acids or phosphinic acids; diaza compounds such as 1,8-diaza-bicyclo(5.4.0)undecene-7 and salts of the diaza compounds with phenols, the above polycarboxylic acids or phosphinic acids, phosphines such as triphenylphosphine and tetraphenylphosphoniumtetraphenyl borate, phenols such as 2,4,6-trisaminomethylphenol, and amine adducts.

The imidazoles include, for example, 2-methylimidazole, 2-phenylimidazole, 2-undecylimidazole, 2-heptadecylimidazole, 2-phenyl-4-methylimidazole, 1-benzyl-2-phenylimidazole, 1-benzyl-2-methylimidazole, 1-cyanoethyl-2-methylimidazole, 1-cyanoethyl-2-phenylimidazole, 1-cyanoethyl-2-undecylimidazole, 2,4-diamino-6(2'-methylimidazole(1'))ethyl-s-triazine, 2,4-diamino-6(2'-undecylimidazole(1'))ethyl-s-triazine, 2,4-diamino-6(2'-ethyl,4-methylimidazole(1'))ethyl-s-triazine, 2,4-diamino-6(2'-methylimidazole(1'))ethyl-s-triazine isocyanuric acid adduct, a 2:3 adduct of 2-methylimidazole isocyanuric acid, an adduct of 2-phenylimidazole isocyanuric acid, 2-phenyl-3,5-dihydroxymethylimidazole, 2-phenyl-4-hydroxymethyl-5-methylimidazole, and 1-cyanoethyl-2-phenyl-3,5-dicyanoethoxymethylimidazole.

Among these curing accelerators, the preferred examples include 2,4-diamino-6(2'-methylimidazole(1'))ethyl-s-triazine isocyanuric acid adduct, a 2:3 adduct of 2-methylimidazole isocyanuric acid, an adduct of 2-phenylimidazole isocyanuric acid, salts of imidazoles with polycarboxylic acids such as phthalic acid, isophthalic acid, terephthalic acid, trimellitic acid, pyromellitic acid, naphthalenedicarboxylic acid, maleic acid and oxalic acid, and amine adducts. The amount of the curing accelerators added is 0.1 to 25 parts by weight, preferably 0.3 to 20 parts by weight, more preferably 0.5 to 15 parts by weight based on 100 parts by weight of the epoxy resin in the liquid crystal sealant.

It is preferred to use these curing accelerators in the form of latent curing accelerators because they have merits such as improvement of operability (prolongation of pot life time). The latent curing accelerators are those which are solid at room temperature and react as curing accelerators only after melting by heating, and include, for example, microcapsule type curing accelerators prepared by microencapsulating these curing accelerators, solid dispersion type curing accelerators (for example, imidazoles) which are hardly soluble in a solvent or epoxy resin, and amine adducts. Of these, it is particularly preferred to use amine adducts as the curing accelerators in view of one-pack storage stability when mixed with the epoxy resin and high reactivity in heating.

Among these curing accelerators, average particle diameter of the solid dispersion type latent curing accelerators is about 6 µm or less, preferably about 4 µm or less, more preferably about 3 µm or less measured by laser method. When the latent curing accelerators of more than 6 µm in average particle diameter are used, it is difficult to perform dispenser coating, and the shape after coating is not uniform. Thereby, the shape of seal after sealing of substrates might not to be uniform. In the case of liquid crystal sealants using the curing accelerators of more than 6 µm in average particle diameter, curing of seal becomes ununiform, and the roughness of fillers is recognized at the sealed portion. The exudation is also apt to occur. The average particle diameter of the latent curing accelerators has no particular lower limit, but normally those of about 1.5 to 2.5 µm are used.

If necessary, a coupling agent can be added to the liquid crystal sealant of the present invention. Examples of the coupling agent include silane coupling agents (also includinging amino silane coupling agents and imidazole silane coupling agents) such as 3-glycidoxypropyltrimethoxysilane, 3-glycidoxypropylmethyldimethoxysilane, 3-glycidoxypropylmethyldimethoxysilane, 2-(3,4-epoxycyclohexyl)ethyltrimethoxysilane, N-phenyl-γ-aminopropyltrimethoxysilane, N-(2-aminoethyl)-3-aminopropylmethyldimethoxysilane, N-(2-aminoethyl)-3-aminopropylmethyltrimethoxysilane, 3-aminopropyltriethoxysilane, 3-mercaptopropyltrimethoxysilane, vinyltrimethoxysilane, N-(2-(vinylbenzylamino)ethyl)-3-aminopropyltrimethoxysilane hydrochloride, 3-methacryloxypropyltrimethoxysilane, 3-chloropropylmethyldimethoxysilane, 3-chloropropyltrimethoxysilane, N-imidazolemethyltrimethoxysilane, N-2-methylimidazolemethyltrimethoxysilane, N-2-ethylimidazolemethyltrimethoxysilane, N-2-isopropylimidazolemethyltrimethoxysilane, N-2-ethyl-4-methylimidazolemethyltrimethoxysilane, N-2-undecylimidazolemethyltrimethoxysilane, N-2-heptadecylimidazolemethyltrimethoxysilane, N-imidazolemethyltriethoxysilane, N-2-methylimidazoleethyltrimethoxysilane, N-2-ethylimidazolemethyltriethoxysilane, N-2-isopropylimidazolemethyltriethoxysilane, N-2-ethyl-4-methylimidazolemethyltriethoxysilane, N-2-undecylimidazolemethyltriethoxysilane, N-2-heptadecylimidazolemethyltriethoxysilane, 2-(N-imidazole)ethyltrimethoxysilane, 2-(N-2-methylimidazole)ethyltrimethoxysilane, 2-(N-2-ethylimidazole)ethyltrimethoxysilane, 2-(N-2-isopropylimidazole)ethyltrimethoxysilane, 2-(N-2-ethyl-4-methylimidazole)ethyltrimethoxysilane, 2-(N-2-undecylimidazole)ethyltrimethoxysilane, 2-(N-2-heptadecylimidazole)ethyltrimethoxysilane, 2-(N-imidazole)ethyltriethoxysilane, 2-(N-2-methylimidazole)ethyltriethoxysilane, 2-(N-2-ethylimidazole)ethyltriethoxysilane, 2-(N-2-isopropylimidazole)ethyltriethoxysilane, 2-(N-2-ethyl-4-methylimidazole)ethyltriethoxysilane, 2-(N-2-undecylimidazole)ethyltriethoxysilane, 2-(N-2-heptadecylimidazole)ethyltriethoxysilane, 3-(N-imidazole)propyltrimethoxysilane, 3-(N-2-methylimidazole)propyltrimethoxysilane, 3-(N-2-ethylimidazole)propyltrimethoxysilane, 3-(N-2-isopropylimidazole)propyltrimethoxysilane, 3-(N-2-ethyl-4-methylimidazole)propyltrimethoxysilane, 3-(N-2-undecylimidazole)propyltrimethoxysilane, 3-(N-2-heptadecylimidazole)propyltrimethoxysilane, 3-(N-imidazole)propyltriethoxysilane, 3-(N-2-methylimidazole)propyltriethoxysilane, 3-(N-2-ethylimidazole)propyltriethoxysilane, 3-(N-2-isopropylimidazole)propyltriethoxysilane, 3-(N-2-ethyl-4-methylimidazole)propyltriethoxysilane, 3-(N-2-undecylimidazole)propyltriethoxysilane, 3-(N-2-heptadecylimidazole)pnopyltriethoxysilane, 1 H-imidazole-1-ethanol, and α-((3-(trimethoxysilyl)propoxy)methyl), titanium-based coupling agents such as isopropyl(N-ethylaminoethylamino) titanate, isopropyltriisostearoyl titanate, titanium di(dioctylpyrophosphate) oxyacetate, tetraisopropyldi(dioctylphosphite) titanate and neoalkoxytri(p-N-(β-aminoethyl)aminophenyl) titanate, and zirconium- or aluminum-based coupling agents such as Zr-acetylacetonate, Zr-methacrylate, Zr-propionate, neoalkoxy zirconate, neoalkoxytrisneodecanoyl zirconate, neoalkoxytris(dodecanoyl)benzenesulfonyl zirconate, neoalkoxytris(ethylenediaminoethyl) zirconate, neoalkoxytris(m-aminophenyl) zirconate, ammonium zirconium carbonate, Al-acetylacetonate, Al-methacrylate and Al-propionate.

In the present invention, silane coupling agents are preferably used, aminosilane coupling agents are more preferably used, and imidazole silane coupling agents are particularly preferably used. By using the coupling agent, there are obtained liquid crystal sealants excellent in reliability in moisture resistance and the adhesion strength thereof after absorption of moisture is not inclined to reduce.

When the coupling agent is added, the amount thereof is about 0.1 to 15% by weight in the liquid crystal sealant.

The liquid crystal sealant of the present invention may contain a solvent in order to reduce the viscosity of the sealant at the time of coating for improving the operability of coating on the substrate. The applicable solvents include, for example, alcohol solvents, ether solvents, acetate solvents and basic acid ester solvents. These may be used each alone or as a mixture of two or more, and in an arbitrary ratio.

Examples of the alcohol solvents are alkyl alcohols such as ethanol and isopropyl alcohol, and alkoxy alcohols such as 3-methyl-3-methoxy butanol, 3-methyl-3-ethoxy butanol, 3-methyl-3-n-propoxy butanol, 3-methyl-3-isopropoxy butanol, 3-methyl-3-n-butoxy butanol, 3-methyl-3-isobutoxy butanol, 3-methyl-3-sec-butoxy butanol and 3-methyl-3-tert-butoxy butanol.

Examples of the ether solvents include monohydric alcohol ether solvents, alkylene glycol monoalkyl ether solvents, alkylene glycol dialkyl ether solvents, dialkylene glycol alkyl ether solvents, and trialkylene glycol alkyl ether solvents.

Examples of the monohydric alcohol ether solvents include 3-methyl-3-methoxybutanol methyl ether, 3-methyl-3-ethoxybutanol ethyl ether, 3-methyl-3-n-butoxybutanol ethyl ether, 3-methyl-3-isobutoxybutanol propyl ether, 3-methyl-3-sec-butoxybutanol isopropyl ether, and 3-methyl-3-tert-butoxybutanol n-butyl ether.

Examples of the alkylene glycol monoalkyl ether solvents include propylene glycol monomethyl ether, propylene glycol monoethyl ether, propylene glycol monopropyl ether, propylene glycol monoisopropyl ether, propylene glycol mono-n-butyl ether, propylene glycol monoisobutyl ether, propylene glycol mono-sec-butyl ether, propylene glycol mono-tert-butyl ether, ethylene glycol monomethyl ether, ethylene glycol monoethyl ether, ethylene glycol monopropyl ether, ethylene glycol monoisopropyl ether, ethylene glycol mono-n-butyl ether, ethylene glycol monoisobutyl ether, ethylene glycol mono-sec-butyl ether, and ethylene glycol mono-tert-butyl ether.

Examples of the alkylene glycol dialkyl ether solvents include propylene glycol dimethyl ether, propylene glycol diethyl ether, propylene glycol dipropyl ether, propylene glycol diisopropyl ether, propylene glycol di-n-butyl ether, propylene glycol diisobutyl ether, propylene glycol di-sec-butyl ether, propylene glycol di-tert-butyl ether, ethylene glycol dimethyl ether, ethylene glycol diethyl ether, ethylene glycol dipropyl ether, ethylene glycol diisopropyl ether, ethylene glycol di-n-butyl ether, ethylene glycol diisobutyl ether, ethylene glycol di-sec-butyl ether, and ethylene glycol di-tert-butyl ether.

Examples of the dialkylene glycol alkyl ether solvents include dipropylene glycol methyl ether, dipropylene glycol ethyl ether, dipropylene glycol dipropyl ether, dipropylene glycol diisopropyl ether, dipropylene glycol di-n-butyl ether, dipropylene glycol diisobutyl ether, dipropylene glycol di-sec-butyl ether, dipropylene glycol di-tert-butyl ether, diethylene glycol dimethyl ether (diglyme), diethylene glycol diethyl ether, diethylene glycol dipropyl ether, diethylene glycol diisopropyl ether, diethylene glycol di-n-butyl ether, diethylene glycol diisobutyl ether, diethylene glycol di-sec-bLityl ether, and diethylene glycol di-tert-butyl ether.

Examples of the trialkylene glycol alkyl ether solvents include alkylene glycol dialkyl ethers such as tripropylene glycol dimethyl ether, tripropylene glycol diethyl ether, tridipropylene glycol dipropyl ether, tripropylene glycol diisopropyl ether, tripropylene glycol di-n-butyl ether, tripropylene glycol diisobutyl ether, tripropylene glycol di-sec-butyl ether, tripropylene glycol di-tert-butyl ether, triethylene glycol dimethyl ether, triethylene glycol diethyl ether, triethylene glycol dipropyl ether, triethylene glycol diisopropyl ether, triethylene glycol di-n-butyl ether, triethylene glycol diisobutyl ether, triethylene glycol di-sec-butyl ether, and triethylene glycol di-teii-butyl ether.

Examples of the acetate solvents include alkylene glycol monoalkyl ether acetates such as ethylene glycol monomethyl ether acetate, ethylene glycol monoethyl ether acetate, ethylene glycol monopropyl ether acetate, ethylene glycol monoisopropyl ether acetate, ethylene glycol mono-n-butyl ether acetate, ethylene glycol mono-see-butyl ether acetate, ethylene glycol monoisobutyl ether acetate, ethylene glycol mono-tert-butyl ether acetate, propylene glycol monomethyl ether acetate, propylene glycol monoethyl ether acetate, propylene glycol monoisopropyl ether acetate, propylene glycol monopropyl ether acetate, propylene glycol mono-n-butyl ether acetate, propylene glycol mono-sec-butyl ether acetate, propylene glycol monoisobutyl ether acetate, propylene glycol mono-tert-butyl ether acetate, 3-methyl-3-methoxybutyl acetate, 3-methyl-3-ethoxybutyl acetate, 3-methyl-3-propoxybutyl acetate, 3-methyl-3-isopropoxybutyl acetate, 3-methyl-3-n-butoxyethyl acetate, 3-methyl-3-isobutoxybutyl acetate, 3-methyl-3-sec-butoxybutyl acetate, and 3-methyl-3-tert-butoxybutyl acetate, ethylene glycol diacetate, diethylene glycol diacetate, triethylene glycol diacetate, propylene glycol diacetate, dipropylene glycol diacetate, and tripropylene glycol diacetate.

The basic acid ester solvent include, for example, monobasic acid ester solvents such as butyl acetate and ethyl acetate, and dibasic acid ester solvents such as dimethyl adipate, dimethyl succinate, dimethyl glutarate and dioctyl phthalate.

As for the amount of the solvents, they can be used in an optional amount necessary for adjusting the viscosity of the liquid crystal sealant to such a value that enables coating with the sealant such as 20 to 40 Pa· s at 25°C by a method of dispenser coating, screen printing or the like. Generally, the solvents are used in such a manner that nonvolatile components are contained in an amount of 70% by weight or more, preferably 85 to 95% by weight, more preferably 90 to 95% by weight in the liquid crystal sealant. When liquid crystal cells using the liquid crystal sealant to which the solvent is added are produced, the upper and lower substrates are laminated after volatilizing the solvent by drying during heat leveling after coating the liquid crystal sealant.

The liquid crystal sealant of the present invention can be produced as follows; the above-mentioned epoxy resin, novolak resin and, if necessary, solvent are dissolved by mixing them under stirring and heating, further adding thereto the inorganic filler and, if necessary, other fillers, which are finely dispersed by a known mixing apparatus such as ball mill, sand mill or three-rolls, and then further adding given amounts of the polyfunctional hydrazide compound, curing accelerator, and, if necessary, the coupling agent, an anti-foaming agent, a leveling agent or the like, followed by mixing.

In the liquid crystal display cell of the present invention, a pair of substrates having given electrodes formed thereon are positioned opposite to each other at regular intervals, the periphery of substrates is sealed with the liquid crystal sealant of the present invention, and a liquid crystal is confined in the space between the substrates and the sealant. The liquid crystal to be confined is not particularly limited. Here, the substrates are composed of a combination of substrates which are made of glass, quartz, plastics and silicon or the like and at least one of which is light transmissive. The cell can be produced, for example, in the following manner. First, a spacer (space controlling material) such as glass fiber is added to the liquid crystal sealant of the present invention. The spacer includes, for example, glass fiber, silica beads and polymer beads. The diameter thereof is selected depending on the cell gap of the liquid crystal cell to be produced, and is usually 0.5 to 10 µm. The amount of the spacer used is 0.1 to 4 parts by weight, preferably 0.5 to 2 parts by weight, more preferably 0.9 to 1.5 parts by weight based on 100 parts by weight of the liquid crystal sealant of the present invention. After the liquid crystal sealant to which the spacer is added is coated on one of a pair of the substrates by a dispenser or the like, the solvent is evaporated by heating, for example, at 90°C for 10 minutes, followed by laminating the opposing substrate, and removing the gap by a hot press further, followed by carrying out the curing at 120 to 160°C for 1 to 2 hours to obtain the cell.

### EXAMPLES

The present invention will be explained in more detail by the following examples, which should not be construed as limiting the invention in any manner. In Examples and Comparative Examples,% and part are used on the basis of weight if not otherwise specified. The units of an epoxy equivalent, hydroxyl equivalent and active amine equivalent are g/eq.

### Example 1

70 g of liquid bisphenol A type epoxy resin (RE-310S, manufactured by Nippon Kayaku Co., Ltd.), 30 g of trisphenol methane type epoxy resin (EPPN-501H, manufactured by Nippon Kayaku Co., Ltd.), and 17g of phenol novolak resin (TAMANOL 758, manufactured by Arakawa Chemical Industries, Ltd.) as a curing agent were added to 15 g of RPDE (a mixed solvent of dimethyl glutarate, dimethyl succinate and dimethyl adipate, manufactured by Rhodia Japan) as a solvent, and they were heated and dissolved. 60 g of spherical alumina (NANOTEC ALUMINA SP-C, manufactured by CI Kasei Co., Ltd) having an average particle diameter of about 30 nm as an inorganic filler, 2g of fumed silica (Aerosil R-812, manufactured by NIPPON Aerosil Co., Ltd.) having an average particle diameter of about 7 nm, and 5 g of core-shell structure cross-linking rubber (Paraloid EXL-2655) having an average particle diameter of about 200 nm as an organic filler were added to this resin solution, followed by mixing and dispersing by a sand mill dispersion machine. 17 g of adipic dihydrazide (melting point: 181°C, adjusted to an average particle diameter of 1.7 µm by jet mill grinding) as a polyfunctional hydrazide compound as a curing agent, 7 g of amine adduct (AMICURE MY-HK, manufactured by Ajinomoto-Fine-Techno Co., Inc.) having an average particle diameter of 3 µm or less as a curing accelerator, and 1 g of 3-glycidoxypropyltrimethoxysilane (Sila-Ace S-510, manufactured by Chisso Corporation) as a coupling agent were then kneaded by three-rolls to obtain a liquid crystal sealant of the present invention. The resulting liquid crystal sealants were evaluated in accordance with the following standard, and the results thereof were shown in Table 1.

### Examples 2 to 8 and Comparative Examples 1 to 3

Components were mixed according to formulation of Table 1 to obtain liquid crystal sealants of the present invention or comparative liquid crystal sealants in the same manner as in Example 1. The liquid crystal sealants were estimated in the same manner as in the Example 1, and the evaluation results were shown in Table 1. Gap Formation Test in Glass Substrate Lamination

To the resulting liquid crystal sealant of 100 g, 1 g of polymer beads of 2 µm as spacers are added and mixed under stirring. The resulting liquid crystal sealant was applied onto a glass substrate of 50 mm × 50 mm by a dispenser, and was heated by a hot plate to volatilize a solvent. On one glass substrate, another glass substrate having the same size was then placed at 90°C, and the load was applied onto the glass substrates. The load was then applied on the hot plate of 150°C to press the liquid crystal sealant, and it was microscopically observed whether liquid crystal sealant was pressed to a thickness of the spacer of 2 µm (the gap formation test of the glass substrates). In the test of "gap property of 2 µm", the liquid crystal sealant in which the spacers can be observed was marked as ○, and the liquid crystal sealant in which the spacers cannot be observed was marked as ×.

### Evaluation of the Shape of Sealing

To the resulting liquid crystal sealant of 100 g, 1 g of polymer beads of 2 µm as spacers are added and mixed under stirring. The resulting liquid crystal sealant was applied onto a 50 mm × 50 mm of glass substrate by a dispenser, and was heated by a hot plate to volatilize a solvent. On one glass substrate, another glass substrate having the same size was then placed at 90°C, and the load was applied onto the glass substrates. The load was then applied on the hot plate of 150°C to press the liquid crystal sealant, and the liquid crystal sealant was pressed to a thickness of the spacer of 2 µm. The width of the seal line was observed by the microscope. The minimum and maximum values of the width of the seal were measured. The liquid crystal sealant in which the ratio was 5% or less, the liquid crystal sealant in which the ratio was 5 to 10% and the liquid crystal sealant having irregular shape by foaming or the like were respectively marked as ○, Δ and ×.

### Adhesion strength Test

To the resulting liquid crystal sealant of 100 g, 1 g of polymer beads of 2 µm as spacers are added and mixed under stirring. The resulting liquid crystal sealant was applied onto a 50 mm × 50 mm of glass substrate by a dispenser, and was heated by a hot plate to volatilize a solvent. A 2 mm × 2 mm of glass plate was laminated onto the liquid crystal sealant, and was cured at 150°C for 1 hour. Shear adhesive strength of the glass plates was then measured at 150°C (atmosphere).

As seen from Table 1, the liquid crystal sealant of the present invention has excellent seal shape and narrow gap formation property during the production of the liquid crystal cell, and is excellent in adhesion strength at high temperatures.

### [Table 1]

**Table 1**

| | Ex. 1 | Ex. 2 | Ex. 3 | Ex. 4 | Ex. 5 | Ex. 6 | Ex. 7 | Ex. 8 | Com. Ex. 1 | Com. Ex. 2 | Com. Ex. 3 |
|---|---|---|---|---|---|---|---|---|---|---|---|
| Epoxy resin A | 70 | 70 | 70 | 70 | 70 | 70 | 80 | 80 | 70 | 70 | 100 |
| Epoxy resin B | 30 | 30 | 30 | 30 | 30 | 30 | 20 | 20 | 30 | 30 | - |
| Curing agent A | 17 | 17 | 17 | 28 | 17 | 17 | 7.5 | 7.5 | - | 54 | 54 |
| Curing agent B | 17 | 17 | 17 | 12 | 17 | 17 | 10 | 10 | 22 | - | - |
| Curing agent C | | | | | | | 16 | 16 | | | |
| Inorganic filler A | 60 | 60 | 60 | 60 | 60 | 60 | 90 | 90 | 60 | 40 | 40 |
| Inorganic filler B | 2 | 2 | 2 | 2 | 2 | 2 | 4 | 4 | 2 | 10 | 10 |
| Organic filler | 5 | 5 | 5 | 5 | 5 | 5 | 5 | 5 | 5 | 5 | 10 |
| Coupling agent A | 1 | - | - | 1 | 1 | - | 1 | 1 | 1 | 5 | 5 |
| Coupling agent B | - | 1 | - | - | - | 1 | | | - | - | - |
| Coupling agent C | - | - | 1 | - | - | - | - | - | - | - | - |
| Curing accelerator A | 5 | 5 | 5 | 5 | - | - | - | 5 | 5 | 15 | |
| Curing accelerator B | - | - | - | - | 5 | 5 | 5 | - | - | - | 15 |
| Solvent | 15 | 15 | 15 | 15 | 15 | 15 | 33 | 33 | 15 | 15 | 15 |
| (Evaluation) | | | | | | | | | | | |
| Viscosity 10 rpm/25°C | 25 | 26 | 27 | 25 | 26 | 31 | 37 | 35 | 34 | 33 | 28 |
| Adhesion Strength (MPa) at 150°C | 34 | 37 | 30 | 25 | 32 | 51 | 43 | 41 | 39 | 9 | 10 |
| Shape of sealing | ○ | ○ | ○ | ○ | ○ | ○ | ○ | ○ | × | ○ | ○ |
| Gap formation of 2 µm | ○ | ○ | ○ | ○ | ○ | ○ | ○ | ○ | × | ○ | ○ |

| | | | | | | | | | | | |
|---|---|---|---|---|---|---|---|---|---|---|---|
| Epoxy resin A RE-310S (bisphenol A type epoxy resin), manufactured by Nippon Kayaku Co., Ltd. Epoxy resin B EPPN-501H (trisphenol methane type epoxy resin), manufactured by Nippon Kayaku Co., Ltd. Curing agent A TAMANOL (phenol novolak resin), manufactured by Arakawa Chemical Industries, Ltd. Curing agent B ADH (adipic dihydrazide) Curing agent C VDH (1.3-bis(hydrazino carbonoethyl)-5-isopropylhydantoin) Inorganic filler A NANOTEC ALUMINA SP-C (spherical alumina, average particle diameter: 30 nm), manufactured by CI Kasei Co., Ltd. Inorganic filler B Aerosil R 812 (fumed silica, average particle diameter: 7 nm), NIPPON Aerosil Co., Ltd. Organic filler Paraloid EXL-2655 (core-shell structure cross-linking rubber) Coupling agent A Sila-Ace S-510 (3-glycidoxypropyltrimethoxysilane), manufactured by Chisso Corporation Coupling agent B IS-1000 (1H imidazole-1-ethanol. α((3-(trimethoxysilyl) propoxy) methyl), manufactured by Nikko Materials Co., Ltd. Coupling agent C KBM-573 (N-phenyl-γ-aminopropyltrimethoxysilane), manufactured by Shin-Etsu Chemical Co., Ltd. Curing accelerator A MY-HK (amine adduct), manufactured by Ajinomoto-Fine-Techno Co., Inc. Curing accelerator B 2MA-OK (2,4-diamino-6-[2'methylimidazole(1')]-ethyl-s-triazine isocyanuric acid adduct), manufactured by Shikoku Chemicals Corporation Solvent RPDE (mixed solvent of dimethyl adipate, dimethyl succinate and dimethyl glutarate), manufactured by Rhodia Japan | | | | | | | | | | | |

## Claims

1. A liquid crystal sealant **characterized by** comprising:
(a) an epoxy resin;
(b) a curing agent containing at least one type of each of a novolak resin and a polyfunctional hydrazide compound; and
(c) an inorganic filler.

2. The liquid crystal sealant according to claim 1, wherein the ratio of the novolak resin in the curing agent (b) is from 5 to 90% by weight.

3. The liquid crystal sealant according to any one of claims 1 and 2, wherein the inorganic filler (c) is alumina and/or silica.

4. The liquid crystal sealant according to any one of claims 1 to 3, wherein the inorganic filler (c) has an average particle diameter of 2000 nm or less.

5. The liquid crystal sealant according to any one of claims 1 to 4, further comprising a coupling agent.

6. The liquid crystal sealant according to claim 5, wherein the coupling agent is an imidazole silane coupling agent.

7. The liquid crystal sealant according to any one of claims 1 to 6, further comprising a curing accelerator.

8. The liquid crystal sealant according to claim 7, wherein the curing accelerator is a latent curing accelerator.

9. A liquid crystal display cell sealed by the liquid crystal sealant according to any one of claims 1 to 8.
